(19) Europäisches Patentamt
European Patent Office
Office européen des brevets

(11) **EP 2 465 328 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(21) Anmeldenummer: **10739886.9**

(22) Anmeldetag: **23.07.2010**

(51) Int Cl.:
***H05B 33/08*** (2006.01)

(86) Internationale Anmeldenummer:
**PCT/EP2010/060738**

(87) Internationale Veröffentlichungsnummer:
**WO 2011/018325 (17.02.2011 Gazette 2011/07)**

(54) **SCHALTUNGSANORDNUNG ZUM BETREIBEN LEDS FÜR EINE MIKROSPIEGELANORDNUNG**

CIRCUIT FOR DRIVING LEDS FOR A MICRO-MIRROR ARRAY

AGENCEMENT DE CIRCUITS POUR LE FONCTIONNEMENT DE DIODES ÉLECTROLUMINESCENTES D'UN AGENCEMENT DE MICROMIROIRS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.08.2009 DE 102009037576**

(43) Veröffentlichungstag der Anmeldung:
**20.06.2012 Patentblatt 2012/25**

(73) Patentinhaber: **OSRAM GmbH**
**80807 München (DE)**

(72) Erfinder: **OSTERRIED, Josef**
**85521 Ottobrunn (DE)**

(56) Entgegenhaltungen:
**EP-A2- 1 691 583          US-A- 5 706 061**
**US-A1- 2006 158 566       US-A1- 2006 192 728**

**Beschreibung**

**Technisches Gebiet**

Die vorliegende Erfindung betrifft eine Schaltungsanordnung zum Betreiben mindestens einer LED mit einem Eingang mit einem ersten und einem zweiten Eingangsanschluss zum Koppeln mit einer Versorgungsgleichspannung, einem Ausgang mit einem ersten und einem zweiten Ausgangsanschluss zum Bereitstellen eines Ausgangsstroms an die mindestens eine LED, einer Mikrospiegelanordnung, die eine Vielzahl von Mikrospiegeln umfasst, einer ersten Steuervorrichtung, die ausgelegt ist, an ihrem Ausgang ein erstes Steuersignal für die Mikrospiegelanordnung bereitzustellen, wobei das erste Steuersignal auf eine erste Taktfrequenz synchronisiert ist, einem Schaltregler, dessen Eingang mit dem ersten und dem zweiten Eingangsanschluss und dessen Ausgang mit dem ersten und dem zweiten Ausgangsanschluss gekoppelt ist, wobei der Schaltregler einen Schalter umfasst, und einer zweiten Steuervorrichtung, die ausgelegt ist, an ihrem Ausgang ein zweites Steuersignal für den Schalter des Schaltreglers bereitzustellen. Sie betrifft überdies ein entsprechendes Verfahren zum Betreiben mindestens einer LED.

**Stand der Technik**

Die vorliegende Erfindung befasst sich insbesondere mit einer Problematik, wie sie bei Videoprojektoren auftritt, die LEDs als Lichtquelle verwenden und einen Mikrospiegelaktor als bildgebendes Element. Ein Mikrospiegelaktor ist ein mikromechanischer Baustein, der mithilfe einzeln beweglicher Spiegel zur gezielten Lichtlenkung genutzt werden kann. Mithilfe einer matrixförmigen Anordnung können Mikrospiegelaktoren das Licht einer starken Lichtquelle, vorliegend von LEDs, so ablenken, dass ein Bild projiziert wird. Bezeichnungen, unter denen diese Technologie zu finden ist, sind Digital Micromirror Device (DMD) und Digital Light Processing (DLP).

Die Mikrospiegelaktoren bestehen in der Regel aus matrixförmig angeordneten Einzelelementen, wobei der einzelne Mikrospiegel aus einer verkippbaren spiegelnden Fläche mit einer Kantenlänge von wenigen Mikrometern besteht. Die Mikrospiegel auf einem DMD-Chip besitzen beispielsweise eine Kantenlänge von etwa 16 $\mu$m und sind damit kleiner als ein Fünftel der Breite eines menschlichen Haares. Die Bewegung wird durch die Kraftwirkung elektrostatischer Felder hervorgerufen. Jeder Mikrospiegel lässt sich in seinem Winkel einzeln verstellen und besitzt in der Regel zwei stabile Endzustände, zwischen denen sie innerhalb einer Sekunde bis zu 5000-mal wechseln können.

DMD-Chips mit einer XGA-Bildauflösung von 1024 x 768 Pixeln enthalten eine Anordnung von 786.432 winzigen Spiegeln. Mittlerweile sind DMD-Chips mit Auflösungen bis zu 2048 x 1080 Pixeln erhältlich.

Verschiedene Helligkeitsstufen der einzelnen Bildpunkte werden über eine binäre pulsweitenmodulierte Ansteuerung der Spiegel erzeugt. Zur Darstellung von zum Beispiel 32 (= $2^5$) Helligkeitsstufen werden fünf Zustände benötigt. Diese unterscheiden sich dadurch, wie lange der DMD geschaltet, d.h. an, ist. Beim ersten Zustand (Bit 0) ist der Spiegel die kürzestmögliche Zeit an oder aus (1 oder 0). Beim nächsten Zustand (Bit 1) verdoppelt sich die Zeit und so weiter. Die Gesamtzeit für einen Zyklus beträgt damit bei 5 Bit insgesamt 496 $\mu$s.

Zur Erzeugung farbiger Bildpunkte werden bei Videoprojektoren, die mit LEDs als Lichtquelle arbeiten, üblicherweise drei LEDs verwendet, nämlich eine LED, die rotes Licht abgibt, eine LED, die grünes Licht abgibt und eine LED, die blaues Licht abgibt.

Bei einer Primitivlösung liegt die Bildwiederholfrequenz (Frame Rate) bei 60 Hz und damit die Frequenz, mit der die drei LED betrieben werden bei 3 * 60 Hz, also 180 Hz. Zur Vermeidung des Regenbogeneffekts wird jedes Bild mehrfach dargestellt. Derzeit sind 16, 18 oder 20 Teilbilder je Frame üblich. Dadurch ergibt sich eine Ein-/Aus-Frequenz der LEDs von 960, 1080 oder 1200 Hz. Bei je 1/3 Ein-Zeit liegen die Pulslängen, d.h. die Einschaltzeiten je LED, daher bei ca. 277 $\mu$s bis 347 $\mu$s. Da der beteiligte Bildverarbeitungsalgorithmus davon ausgeht, dass während der gesamten jeweiligen Pulslänge konstante Lichtamplitude vorliegt, fallen bereits Einschwingvorgänge von ca. 10 $\mu$s negativ ins Gewicht.

Während bei Verwendung einer Lampe als Lichtquelle wenig Stromschwankungen auftreten, da die Lampe den Strom mit einer Zeitkonstante von ungefähr 100 $\mu$s integriert, tritt bei der Verwendung einer LED als Leuchtquelle das Problem auf, dass das von der LED ausgesandte Licht dem treibenden Strom praktisch verzögerungsfrei folgt. Enthält der treibende Strom AC-Anteile, sogenannten Ripplestrom, so führt dies dazu, dass Bildpunkte, die an und für sich gleich hell sein sollten, tatsächlich unterschiedlich hell dargestellt werden. Als Ripplestrom wird der Wechselstromanteil des LED-Stroms bezeichnet, der dem Gleichanteil des LED-Stroms überlagert ist. Während bei Punkten mit größerer Helligkeit die Integrationsfähigkeit des menschlichen Auges Mittelwertschwankungen des LED-Stroms integriert und diese daher nicht von Bedeutung sind, wird diese Problematik umso kritischer, je geringer die Helligkeit des darzustellenden Bildpunkts ist. Dadurch, dass der Bildpunkt nur kurz angeschaltet wird, nutzt die Integrationsfähigkeit des menschlichen Auges hier nichts. Das Auge stellt Helligkeitsschwankungen fest.

Daher ist die entsprechende LED nicht immer an, sondern nur, wenn die jeweilige Farbe zur Darstellung des entsprechenden Bildpunkts benötigt wird. Deshalb ist das Einschwingverhalten, wie bereits erwähnt, der jeweiligen Farbe von besonderer Bedeutung. Für den Übergang von einem ersten zu einem zweiten Niveau sind deshalb kurze Zeiträume erwünscht, wobei der Strom innerhalb dieser Zeiträume aufgrund der oben erwähnten Problematik möglichst geringe AC-Anteile aufweisen sollte, d.h. der Zielwert muss so schnell wie möglich und ohne nennenswertes Überschwingen erreicht werden.

Bekannt ist die Verwendung von Linearreglern oder unsynchronisierten Schaltreglern als Treiber für die LED eines Videoprojektors mit DMD als bildgebendem Element. Dabei haben Linearregler haben den Vorteil kurzer Anstiegszeiten sowie eines vernachlässigbaren Ripplestroms, das heißt AC-Anteils. Bedenkt man jedoch, dass die Ausgangsspannung eines derartigen Treibers etwa 7 V beträgt, wobei LEDs üblicherweise eine Flussspannung von 3 bis 5 V aufweisen, so wird bei einem typischen LED-Strom von ca. 30 A eine beachtliche Verlustleistung im Schalter des Linearreglers umgesetzt. Dies macht zum einen aufwändige Kühlmaßnahmen erforderlich, zum anderen resultiert dies in einer schlechten Effizienz.

Unsynchronisierte Schaltregler, bei denen der Stromverlauf im Wesentlichen dreieckförmig ist, haben den Vorteil einer guten Effizienz, da der Schalter des Schaltreglers entweder an oder aus ist und sich daher nicht in einem halbleitenden Zustand befindet wie beim Linearregler. Allerdings ist zwischen der Anstiegszeit und dem Ripplestrom, das heißt AC-Anteil, stets ein Kompromiss erforderlich. Eine kurze Anstiegszeit bedeutet einen relativ hohen Ripplestrom, ein geringer Ripplestrom bedeutet eine lange Anstiegszeit. Die sich aus einem hohen Ripplestrom ergebenden Nachteile wurden bereits oben ausführlich dargelegt. Zusammenfassend lässt daher sowohl die Verwendung eines Linearreglers als auch die Verwendung eines unsynchronisierten Schaltreglers Wünsche offen.

**Darstellung der Erfindung**

Die Aufgabe der vorliegenden Erfindung besteht deshalb darin, eine gattungsgemäße Schaltungsanordnung und ein gattungsgemäßes Verfahren derart weiterzubilden, dass der Betrieb der mindestens einen LED bei guter Effizienz, möglichst geringen Helligkeitsschwankungen tatsächlich gleich hell abzubildender Punkte sowie möglichst kurzen Anstiegszeiten ermöglicht wird.

Diese Aufgabe wird erfindungsgemäß dadurch gelöst, dass das zweite Steuersignal auf eine zweite Taktfrequenz $f_{cl2}$ synchronisiert ist, wobei gilt:

$$f_{cl2} = n * f_{cl1}, \; \text{mit } n \in \mathbb{I} \; (\text{Integer}),$$

wobei $f_{cl1}$ die erste Taktfrequenz darstellt.

Dadurch, dass der Schaltregler mit derselben Frequenz wie die Mikrospiegelanordnung arbeitet, oder einem Vielfachen davon, spielt der Ripplestromanteil im LED-Strom keine Rolle mehr. Der Mittelwert des LED-Stroms wird innerhalb eines Taktes der Mikrospiegelanordnung unabhängig vom Ripplestrom, da sich der Ripplestrom unter allen Bedingungen herausmittelt.

Durch diese Synchronisation werden einerseits die Vorteile, wie sie vom unsynchronisierten Schaltregler bekannt sind, beibehalten, andererseits liefert der Schaltregler nunmehr auch bei dunklen Bildpunkten eine konstante Helligkeit; eine Optimierung der Anstiegszeit ist möglich.

Bei einer besonders aufwandsarmen Realisierung wird die zweite Taktfrequenz $f_{cl2}$ gleich der ersten Taktfrequenz $f_{cl1}$ gewählt.

Eine Realisierung, bei der die zweite Taktfrequenz n mal die erste Taktfrequenz beträgt ($f_{cl2} = n * f_{cl1}$), wobei $n \in \mathbb{I}$ und $n \geq 2$, liefert den Vorteil, dass die Induktivitäten und Kapazitäten der Schaltungsanordnung kleiner ausgeführt werden können. Eine allzu hohe Wahl der zweiten Taktfrequenz ist nicht empfehlenswert, da dann die Schaltverluste den Vorteil der kleinen Induktivitäten und Kapazitäten überwiegen.

Bei einer bevorzugten Ausführungsform beträgt die erste Taktfrequenz $f_{cl1}$ zwischen 50 und 200 kHz.

Wenn der Ausgangsstrom einen Nennstrom umfasst, der von einem Ripplestrom überlagert ist, dann wird bei einem bevorzugten Ausführungsbeispiel einer erfindungsgemäßen Schaltungsanordnung der Schaltregler derart ausgelegt, dass der Ripplestrom mindestens 30 % des Nennstroms, bevorzugt mindestens 40 % des Nennstroms und noch bevorzugter mindestens 50 % des Nennstroms beträgt. Dies resultiert in sehr kurzen Anstiegszeiten und damit in einer besonders hohen Bildqualität.

Wenn der Schaltregler eine Induktivität umfasst, ist die Induktivität und die zweite Taktfrequenz bevorzugt so gewählt, dass ein Anstieg des Ausgangsstroms nach einem Abschaltvorgang eine Zeitkonstante aufweist, die kleiner gleich 10 $\mu$s ist. Eine derartige Dimensionierung war bei aus dem Stand der Technik bekannten unsynchronisierten Schaltreglern nicht möglich ohne starke Einbußen bei der Bildqualität in Kauf zu nehmen.

Weitere vorteilhafte Ausführungsformen ergeben sich aus den Unteransprüchen.

Die mit Bezug auf die erfindungsgemäße Schaltungsanordnung vorgestellten bevorzugten Ausführungsformen und deren Vorteile gelten entsprechend, soweit anwendbar, für das erfindungsgemäße Verfahren.

**Kurze Beschreibung der Zeichnung(en)**

Im Nachfolgenden wird nunmehr ein Ausführungsbeispiel einer erfindungsgemäßen Schaltungsanordnung unter Bezugnahme auf die beigefügten Zeichnungen näher beschrieben. Es zeigen:

Fig. 1   in schematischer Darstellung die Ansteuerung eines Mikrospiegels zur Realisierung von drei unter-schiedlichen Helligkeitsstufen;

Fig. 2   den zeitlichen Verlauf des Lichtstroms bezogen auf einen DMD-Takt ($1/f_{cl1}$) für einen Linearregler (a), einen unsynchronisierten Schaltregler mit starker Glättung (b), einen unsynchronisierten Schaltregler mit geringer Glättung (c), einen synchronisierten Schaltregler mit starker Glättung (d), sowie einen synchronisierten Schaltregler mit geringer Glättung (e); und

Fig. 3   in schematischer Darstellung ein Ausführungsbeispiel einer erfindungsgemäßen Schaltungsanordnung.

**Bevorzugte Ausführung der Erfindung**

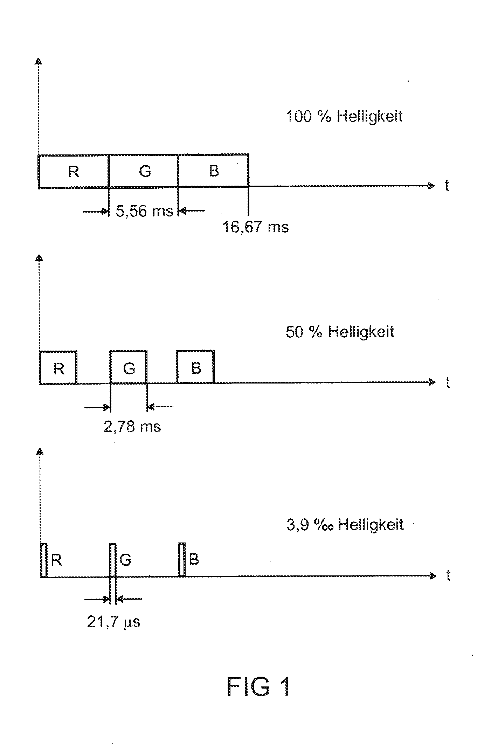

Fig. 1 zeigt in schematischer Darstellung den zeitlichen Verlauf der Ansteuerung eines Mikrospiegels zur Erzeugung eines Bildpunkts mit unterschiedlichen Helligkeitsstufen bei einer 1-Chip-Anordnung. In der oberen Darstellung von Fig. 1 wird demnach zur Erzeugung eines Bildpunkts mit 100 % Helligkeit der Mikrospiegel sowohl während der Rotphase als auch während der Grünphase und der Blauphase jeweils über das gesamte Intervall eingeschaltet. Bei einer Bildwiederholrate von 60 Hz beträgt dabei das Intervall jeder der drei Farben 5,56 ms. Zur Erzeugung eines Bildpunkts mit 50 % Helligkeit, siehe die mittlere Darstellung von Fig. 1, wird demnach der Mikrospiegel in jeder Farbphase nur für die halbe Dauer angesteuert, vorliegend also jeweils 2,78 ms. Die dunkelste Helligkeitsstufe, die bei einem 8-Bit-System 3,9 ‰ beträgt, wird gemäß der unteren Darstellung von Fig. 1 dadurch erzeugt, dass der Mikrospiegel in jeder Farbphase nur für die Dauer von 21,7 $\mu$s eingeschaltet wird. Variiert die Amplitude des LED-Stroms integriert über einen DMD-Takt bei der Ansteuerung unterschiedlicher Bildpunkte auf dieselbe niedrige Helligkeitsstufe, so werden die entsprechenden Bildpunkte tatsächlich mit unterschiedlicher Helligkeit - und nicht wie gewünscht mit derselben Helligkeit dargestellt.

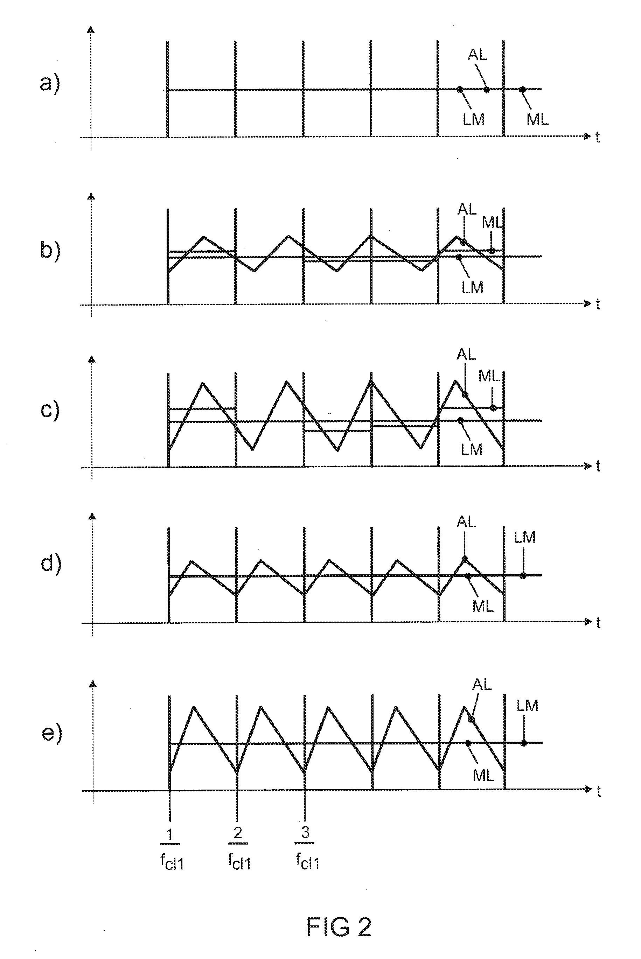

Fig. 2 zeigt den sich ergebenden Lichtstrom für fünf unterschiedliche innerhalb der Schaltungsanordnung als Treiber für die mindestens eine LED verwendete Bausteine. Gemäß Fig. 2a wird ein Linearregler verwendet, bei dem sich ein idealer Lichtstrom ergibt. Der mittlere Lichtstrom ML innerhalb eines Zeitfensters (DMD-Takt) ist gleich wie der langfristige Mittelwert LM. Fig. 2b zeigt den zeitlichen Verlauf bei Verwendung eines unsynchronisierten Schaltreglers mit starker Glättung. Gut zu erkennen ist der dreieckförmige Verlauf des aktuellen Lichtstroms AL. Der mittlere Lichtstrom ML innerhalb eines Zeitfensters ist ungleich wie der langfristige Mittelwert LM. Bei der Darstellung von Fig. 2c wurde ein unsynchronisierter Schaltregler mit geringer Glättung verwendet. Hier ist der mittlere Lichtstrom ML innerhalb eines Zeitfensters ungleich wie der langfristige Mittelwert LM, wobei die Abweichungen größer sind als bei dem unsynchronisierten Schalter mit starker Glättung gemäß Fig. 2b. Die Figuren 2b und 2c zeigen, dass bei unsynchronisiertem Schaltregler der mittlere Lichtstrom ML innerhalb eines Zeitfensters schwankt. Die Abweichung vom Idealwert ist abhängig von der Glättung des Ausgangsstroms.

Bei den Darstellungen von Fig. 2d und Fig. 2e wurde ein erfindungsgemäßer Schaltregler verwendet, das heißt ein Schaltregler, bei dem die Taktfrequenz des Schaltreglers auf die Taktfrequenz des DMD-Takts synchronisiert wurde. Fig. 2d zeigt zunächst den zeitlichen Verlauf bei starker Glättung, Fig. 2e bei geringer Glättung. Es zeigt sich, dass unabhängig von dem Glättungsgrad der mittlere Lichtstrom ML innerhalb eines Zeitfensters gleich wie der langfristige Mittelwert LM ist.

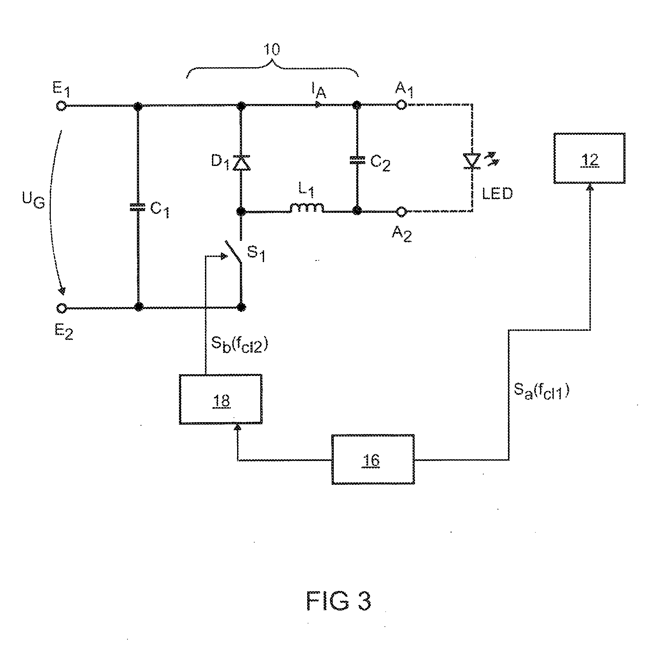

Fig. 3 zeigt in schematischer Darstellung ein Ausführungsbeispiel einer erfindungsgemäßen Schaltungsanordnung. Diese wird eingangsseitig aus einer Versorgungsgleichspannung $U_G$ versorgt, die zwischen einem ersten E1 und einem zweiten Eingangsanschluss E2 angeschlossen ist. Zur Stabilisierung dieser Spannung ist ein Kondensator C1 vorgesehen. Daran schließt sich ein mit 10 bezeichneter Schaltregler an, der vorliegend einen Schalter S1, vorzugsweise ausgebildet als MOSFET, eine Diode D1 sowie eine Spule L1 und optional einen Kondensator C2 umfasst. Die Schaltungsanordnung weist einen Ausgang mit einem ersten A1 und einem zweiten Ausgangsanschluss A2 auf, an dem ein Ausgangsstrom $I_A$ für eine zwischen die Ausgangsanschlüsse gekoppelte mindestens eine LED bereitgestellt wird. Der Ausgangsstrom $I_A$ umfasst einen Nennstrom $I_N$, der von einem Ripplestrom $I_R$ überlagert ist. Die Schaltungsanordnung umfasst weiterhin eine Mikrospiegelanordnung 12. Eine Steuervorrichtung 16 stellt an ihrem Ausgang ein Steuersignal $S_a$ für die Mikrospiegelanordnung 12 bereit, wobei das Steuersignal $S_a$ auf eine erste Taktfrequenz $f_{cl1}$ synchronisiert ist. Die Steuervorrichtung 16 ist überdies mit einer Steuervorrichtung 18 gekoppelt, die an ihrem Ausgang ein Steuersignal

$S_b$ für den Schalter S1 des Schaltreglers 10 bereitstellt. Erfindungsgemäß ist das Steuersignal $S_b$ auf eine Taktfrequenz $f_{cl2}$ synchronisiert, wobei gilt:

$$f_{cl2} = n * f_{cl1},$$

mit $n \in \mathbb{I}$ (Integer).

**Patentansprüche**

1. Schaltungsanordnung zum Betreiben mindestens einer LED mit

   - einem Eingang mit einem ersten (E1) und einem zweiten Eingangsanschluss (E2) zum Koppeln mit einer Versorgungsgleichspannung ($U_G$);
   - einem Ausgang mit einem ersten (A1) und einem zweiten Ausgangsanschluss (A2) zum Bereitstellen eines Ausgangsstroms ($I_A$) an die mindestens eine LED;
   - einer Mikrospiegelanordnung (12), die eine Vielzahl von Mikrospiegeln umfasst;
   - einer ersten Steuervorrichtung (16), die ausgelegt ist, an ihrem Ausgang ein erstes Steuersignal ($S_a$) für die Mikrospiegelanordnung (12) bereitzustellen, wobei das erste Steuersignal ($S_a$) auf eine erste Taktfrequenz ($f_{cl1}$) synchronisiert ist;
   - einem Schaltregler (10), dessen Eingang mit dem ersten (E1) und dem zweiten Eingangsanschluss (E2) und dessen Ausgang mit dem ersten (A1) und dem zweiten Ausgangsanschluss (A2) gekoppelt ist, wobei der Schaltregler (10) einen Schalter (S1) umfasst; und
   - einer zweiten Steuervorrichtung (18), die ausgelegt ist, an ihrem Ausgang ein zweites Steuersignal ($S_b$) für den Schalter (S1) des Schaltreglers (10) bereitzustellen;
   **dadurch gekennzeichnet,**
   **dass** das zweite Steuersignal ($S_b$) auf eine zweite Taktfrequenz ($f_{cl2}$) synchronisiert ist, wobei gilt:

$$f_{cl2} = n * f_{cl1} \quad \text{mit } n \in \mathbb{I}.$$

2. Schaltungsanordnung nach Anspruch 1, **dadurch gekennzeichnet, dass** gilt:

$$f_{cl2} = f_{cl1}.$$

3. Schaltungsanordnung nach Anspruch 1, **dadurch gekennzeichnet,**
   **dass** gilt:

$$f_{cl2} = n * f_{cl1} \quad \text{mit } n \in \mathbb{I} \text{ und } n \geq 2.$$

4. Schaltungsanordnung nach einem der vorhergehenden Ansprüche,
   **dadurch gekennzeichnet,**
   **dass** die erste Taktfrequenz ($f_{cl1}$) zwischen 50 und 200 kHz beträgt.

5. Schaltungsanordnung nach einem der vorhergehenden Ansprüche,
   **dadurch gekennzeichnet,**
   **dass** der Ausgangsstrom ($I_A$) einen Nennstrom (IN) umfasst, der von einem Ripplestrom ($I_R$) überlagert ist, wobei der Schaltregler (10) derart ausgelegt ist, dass der Ripplestrom ($I_R$) mindestens 30 % des Nennstroms ($I_N$), bevorzugt mindestens 40 % des Nennstroms (IN) und noch bevorzugter mindestens 50 % des Nennstroms (IN) beträgt.

6. Schaltungsanordnung nach einem der vorhergehenden Ansprüche,

**dadurch gekennzeichnet,**
**dass** der Schaltregler (10) mindestens eine Induktivität (L1) umfasst, wobei die Induktivität (L1) und die zweite Taktfrequenz ($f_{cl2}$) so gewählt sind, dass ein Anstieg des Ausgangsstroms ($I_A$) nach einem Abschaltvorgang eine Zeitkonstante aufweist, die kleiner gleich 10 µs ist.

7. Verfahren zum Betreiben mindestens einer LED an einer Schaltungsanordnung mit einem Eingang mit einem ersten (E1) und einem zweiten Eingangsanschluss (E2) zum Koppeln mit einer Versorgungsgleichspannung ($U_G$), einem Ausgang mit einem ersten (A1) und einem zweiten Ausgangsanschluss (A2) zum Bereitstellen eines Ausgangsstroms ($I_A$) an die mindestens eine LED; einer Mikrospiegelanordnung (12), die eine Vielzahl von Mikrospiegeln umfasst; einer ersten Steuervorrichtung (16), die ausgelegt ist, an ihrem Ausgang ein erstes Steuersignal ($S_a$) für die Mikrospiegelanordnung (12) bereitzustellen, wobei das erste Steuersignal ($S_a$) auf eine erste Taktfrequenz ($f_{cl1}$) synchronisiert ist; einem Schaltregler (10), dessen Eingang (E1) mit dem ersten und dem zweiten Eingangsanschluss (E2) und dessen Ausgang mit dem ersten (A1) und dem zweiten Ausgangsanschluss (A2) gekoppelt ist, wobei der Schaltregler (10) einen Schalter (S1) umfasst; und einer zweiten Steuervorrichtung (18), die ausgelegt ist, an ihrem Ausgang ein zweites Steuersignal ($S_b$) für den Schalter (S1) des Schaltreglers (10) bereitzustellen; **gekennzeichnet durch** folgenden Schritt:

Synchronisieren des zweiten Steuersignals ($S_b$) auf eine zweite Taktfrequenz ($f_{cl2}$), wobei gilt:

$$f_{cl2} = n * f_{cl1} \quad \text{mit } n \in \mathbb{I}.$$

**Claims**

1. Circuit arrangement for operating at least one LED, comprising

- an input comprising a first input connection (E1) and a second input connection (E2) for coupling to a DC supply voltage ($U_G$) ;
- an output comprising a first output connection (A1) and a second output connection (A2) for providing an output current ($I_A$) to the at least one LED;
- a micromirror array (12), which comprises a multiplicity of micromirrors;
- a first control apparatus (16), which is designed to provide a first control signal ($S_a$) for the micromirror array (12) at the output of said control apparatus, wherein the first control signal ($S_a$) is synchronized with a first clock frequency ($f_{cl1}$);
- a switching controller (10), whose input is coupled to the first input connection (E1) and the second input connection (E2) and whose output is coupled to the first output connection (A1) and the second output connection (A2), wherein the switching controller (10) comprises a switch (S1) ; and
- a second control apparatus (18), which is designed to provide a second control signal ($S_b$) for the switch (S1) of the switching controller (10) at the output of said control apparatus;
**characterized in that** the second control signal ($S_b$) is synchronized with a second clock frequency ($f_{cl2}$), wherein the following applies

$$f_{cl2} = n * f_{cl1} \quad \text{where } n \varepsilon \text{ } |.$$

2. Circuit arrangement according to Claim 1, **characterized in that** the following applies:

$$f_{cl2} = f_{cl1}.$$

3. Circuit arrangement according to Claim 1, **characterized in that** the following applies:

$$f_{cl2} = n * f_{cl1}$$

where n $\varepsilon$ | and n $\geq$ 2.

4. Circuit arrangement according to one of the preceding claims, **characterized in that** the first clock frequency ($f_{cl1}$) is between 50 and 200 kHz.

5. Circuit arrangement according to one of the preceding claims, **characterized in that** the output current ($I_A$) comprises a rated current ($I_N$) which has a ripple current ($I_R$) superimposed on it, wherein the switching controller (10) is designed in such a way that the ripple current ($I_R$) is at least 30% of the rated current ($I_N$), preferably at least 40% of the rated current (IN) and further preferably at least 50% of the rated current ($I_N$).

6. Circuit arrangement according to one of the preceding claims, **characterized in that** the switching controller (10) comprises at least one inductance (L1), wherein the inductance (L1) and the second clock frequency ($f_{c12}$) are selected in such a way that an increase in the output current ($I_A$) after a disconnection operation has a time constant which is less than or equal to 10 $\mu$s.

7. Method for operating at least one LED using a circuit arrangement comprising an input comprising a first input connection (E1) and a second input connection (E2) for coupling to a DC supply voltage ($U_G$), an output comprising a first output connection (A1) and a second output connection (A2) for providing an output current ($I_A$) to the at least one LED; a micromirror array (12), which comprises a multiplicity of micromirrors; a first control apparatus (16), which is designed to provide a first control signal ($S_a$) for the micromirror array (12) at the output of said control apparatus, wherein the first control signal ($S_a$) is synchronized with a first clock frequency ($f_{cl1}$); a switching controller (10), whose input is coupled to the first input connection (E1) and the second input connection (E2) and whose output is coupled to the first output connection (A1) and the second output connection (A2), wherein the switching controller (10) comprises a switch (S1) ; and a second control apparatus (18), which is designed to provide a second control signal ($S_b$) for the switch (S1) of the switching controller (10) at the output of said control apparatus; **characterized by** the following step:

synchronizing the second control signal ($S_b$) with a second clock frequency ($f_{c12}$), wherein the following applies:

$$f_{c12} = n * f_{cl1} \text{ where } n \varepsilon |.$$

**Revendications**

1. Agencement de circuit pour faire fonctionner au moins une LED, comprenant

- une entrée avec une première (E1) et une deuxième borne d'entrée (E2) à coupler à une tension continue d'alimentation ($U_G$) ;
- une sortie avec une première (A1) et une deuxième borne de sortie (A2) pour fournir un courant de sortie ($I_A$) à ladite au moins une LED ;
- un agencement de micro-miroirs (12) comprenant une pluralité de micro-miroirs ;
- un premier dispositif de commande (16) qui est conçu pour fournir à sa sortie un premier signal de commande ($S_a$) pour l'agencement de micro-miroirs (12), le premier signal de commande ($S_a$) étant synchronisé sur une première fréquence d'horloge ($f_{cl1}$) ;
- un régulateur de commutation (10) dont l'entrée est couplée à la première (E1) et à la deuxième borne d'entrée (E2) et dont la sortie est couplée à la première (A1) et à la deuxième borne de sortie (A2), le régulateur de commutateur (10) comprenant un commutateur (S1) ; et
- un deuxième dispositif de commande (18) qui est conçu pour fournir à sa sortie un deuxième signal de commande ($S_b$) pour le commutateur (S1) du régulateur de commutation (10) ;
**caractérisé en ce que**
le deuxième signal de commande ($S_b$) est synchronisé sur une deuxième fréquence d'horloge ($f_{cl2}$), où

$$f_{cl2} = n * f_{cl1} \text{ avec } n \in \mathbb{I}.$$

2. Agencement de circuit selon la revendication 1, **caractérisé en ce que**

$$f_{cl2} = f_{cl1}.$$

3. Agencement de circuit selon la revendication 1, **caractérisé en ce que**

$$f_{cl2} = n * f_{cl1} \quad avec \ n \in \mathbb{I} \ et \ n \geq 2.$$

4. Agencement de circuit selon l'une des revendications précédentes, **caractérisé en ce que** la première fréquence d'horloge ($f_{cl1}$) est comprise entre 50 et 200 kHz.

5. Agencement de circuit selon l'une des revendications précédentes, **caractérisé en ce que** le courant de sortie ($I_A$) comprend un courant nominal ($I_N$) auquel un courant ondulé ($I_R$) est superposé, le régulateur de commutation (10) étant adapté pour que le courant ondulé ($I_R$) s'élève à au moins 30 % du courant nominal ($I_N$), de préférence à au moins 40% du courant nominal ($I_N$) et mieux encore à au moins 50 % du courant nominal ($I_N$).

6. Agencement de circuit selon l'une des revendications précédentes, **caractérisé en ce que** le régulateur de commutation (10) comprend au moins une inductance (L1), ladite inductance (L1) et la deuxième fréquence d'horloge ($f_{cl2}$) étant choisies de telle façon qu'un accroissement du courant de sortie ($I_A$) présente après une opération de coupure une constante de temps inférieure ou égale à 10 $\mu$s.

7. Procédé pour faire fonctionner au moins une LED sur un agencement de circuit comprenant une entrée avec une première (E1) et une deuxième borne d'entrée (E2) à coupler à une tension continue d'alimentation ($U_G$), une sortie avec une première (A1) et une deuxième borne de sortie (A2) pour fournir un courant de sortie ($I_A$) à ladite au moins une LED ; un agencement de micro-miroirs (12) comprenant une pluralité de micro-miroirs ; un premier dispositif de commande (16) qui est conçu pour fournir sur sa sortie un premier signal de commande ($S_a$) pour l'agencement de micro-miroirs (12), le premier signal de commande ($S_a$) étant synchronisé sur une première fréquence d'horloge ($f_{cl1}$) ; un régulateur de commutation (10) dont l'entrée est couplée à la première (E1) et à la deuxième borne d'entrée (E2) et dont la sortie est couplée à la première (A1) et à la deuxième borne de sortie (A2), le régulateur de commutateur (10) comprenant un commutateur (S1) ; et un deuxième dispositif de commande (18) qui est conçu pour fournir sur sa sortie un deuxième signal de commande ($S_b$) pour le commutateur (S1) du régulateur de commutation (10) ; **caractérisé par** l'étape suivante :

synchroniser le deuxième signal de commande ($S_b$) sur une deuxième fréquence d'horloge ($f_{cl2}$), où

$$f_{cl2} = n * f_{cl1} \quad avec \ n \in \mathbb{I}.$$

100 % Helligkeit

R G B

5,56 ms

16,67 ms

50 % Helligkeit

R G B

2,78 ms

3,9 ‰ Helligkeit

R G B

21,7 µs

FIG 1

FIG 2

FIG 3